# EUROPÄISCHE PATENTSCHRIFT

(11) **EP 2 384 941 B1**
(45) Veröffentlichungstag und Bekanntmachung des Hinweises auf die Patenterteilung: **20.07.2016**
(21) Anmeldenummer: 11001568.2
(22) Anmeldetag: 25.02.2011
(51) Int. Cl.: B60T 8/17, B60T 13/08, B60T 7/20

(54) **Verfahren zum Bremsen und Bremssystem eines fremdkraftgebremsten Gerätes**
Method for braking and braking system of an externally braked device
Procédé de freinage et système de freinage d'un appareil freiné par une force étrangère

(30) Priorität: 05.05.2010 DE 102010019433
(43) Veröffentlichungstag der Anmeldung: 09.11.2011
(73) Patentinhaber: Robert Bosch GmbH, 70442 Stuttgart (DE)
(72) Erfinder: Jessen, Sönke, 71732 Tamm (DE)
(74) Vertreter: Thürer, Andreas

(56) Entgegenhaltungen:
- DE-C1- 4 446 358

## Beschreibung

Die Erfindung betrifft ein Verfahren zum Bremsen eines fremdkraftgebremsten Gerätes mit eigenem Fahrwerk, das an ein motorgetriebenes Nutzfahrzeug angehängt ist, und ein Bremssystem, das nach einem derartigen Verfahren ansteuerbar ist.

Derartige Bremssysteme werden beispielsweise bei landwirtschaftlichen Nutzfahrzeugen verwendet, an die ein Anhänger, ein Güllefass, ein Miststreuer, eine Feldspritze, ein Düngerstreuer, ein angehängtes Bodenbearbeitungsgerät oder ein sonstiges Gerät mit eigenem Fahrwerk angehängt ist, wobei dieses Gerät fremdkraftgebremst ist. D.h. bei einer Betätigung der Fahrzeugbremse wird auch die Anhängerbremse betätigt, wobei diese elektrisch, hydraulisch und/oder pneumatisch wirken kann.

Insbesondere Traktoren werden neben der Feldarbeit auch sehr intensiv für Transportzwecke genutzt. Dabei steigen entsprechend die Transportmenge, das Transportgewicht und die Transportgeschwindigkeit in den letzten Jahren immer weiter an. Früher wurden auflaufgebremste Anhänger verwendet, heutzutage sind jedoch aufgrund der höheren zulässigen Geschwindigkeiten und/oder Gewichte fremdkraftgebremste Anhänger gesetzlich vorgeschrieben. Bei diesen Anhängern wird bei der Betätigung der Traktor-Betriebsbremse zum einen die Traktorbremse betätigt und zum anderen ein Bremssignal vom Traktor an den Anhänger übertragen und damit auch die Anhängerbremse betätigt. Fehlt dieses Bremssignal, wie beispielsweise beim Bremsen aufgrund des Motorschleppmoments des Dieselmotors, dann wird der Anhänger nicht abgebremst, so dass er auf den Traktor schiebt.

Diese Problematik hat sich weiter verschärft, da in der Landwirtschaft immer mehr Traktoren mit stufenlosen CVT-Getrieben eingesetzt werden. Derartige Getriebe sind sehr komfortabel zu bedienen und ermöglichen es, den Traktor nur mittels der Motorbremse abzubremsen. Diese Bremswirkung ist in vielen Fällen ausreichend, so dass ein zusätzliches Bremsen mit der Betriebsbremse oftmals überflüssig ist. Bei CVT-Getrieben erfolgt das Motorbremsen dadurch, dass das Getriebe geschwindigkeitsabhängig in Richtung "kleinerer Gänge" verstellt und der Motor somit auf höhere Drehzahl gebracht wird. Der Begriff "kleinere Gänge" wird hier nur zur Verdeutlichung verwendet, da ein CVT-Getriebe keine Gangabstufungen kennt. Durch das bei höheren Drehzahlen höhere Schleppmoment bremst der Motor das Fahrzeug dann entsprechend ab, wobei durch die automatische, in der Regel elektronische Getriebeverstellung sichergestellt ist, dass der Motor nicht überdrehen kann. Durch die Steuerung des CVT-Getriebes erfolgt das Bremsen derart, dass der Motor nicht überdreht aber ständig mit maximaler Drehzahl bremst, die oberhalb der Nenndrehzahl liegt.

Bei einer derartigen Motorbremsung wird die Bremskraft nur über die vom Motor angetriebenen Räder, in der Regel über die Hinterräder, des Traktors übertragen - im Straßenbetrieb ist der Allradantrieb des Traktors normalerweise wegen des übermäßigen Verschleißes abgeschaltet.

Ist nun ein fremdkraftgebremster Anhänger angehängt, so wird dieser nicht gebremst, da die Betriebsbremse des Traktors nicht betätigt ist. Dies hat zur Folge, dass der Anhänger mit seiner vollen Massenträgheit auf den Traktor aufschiebt. Der gesamte Traktorzug wird dann über die Traktor-Hinterräder abgebremst. Dabei ist zu bedenken, dass herkömmliche Traktoren ein Gewicht zwischen 5 bis12 Tonnen haben und häufig Anhänger mit weit höherem Gewicht ziehen - das auf den Traktor wirkende Massenträgheitsmoment des Hängers ist somit erheblich. Bei ungünstigen Bedingungen kann es dann vorkommen, dass die Traktor-Hinterräder die erforderliche Bremskraft nicht auf den Boden übertragen können und ihre Seitenführungskraft verlieren, so dass der Traktor aufgrund des schiebenden Hängers seitlich ausbricht. Aufgrund der Gefährdung der Bedienperson und der sonstigen Verkehrsteilnehmer sind derartige unkontrollierte Betriebszustände unbedingt zu vermeiden.

Aus der DE 44 46 358 C1 ist ein Verfahren zum Einstellen der Bremskraftaufteilung zwischen einem Zugfahrzeug und einem Anhänger in Abhängigkeit vom Gewicht des Anhängers bekannt. Das Verfahren dient zur derartigen anfänglichen Einstellung und gegebenenfalls Nachkorrektur der Parameter des Anhängerbremsventils, dass eine optimale Bremskraftverteilung zwischen Zugfahrzeug und Anhänger erreicht wird.

In den Druckschriften DE 10 2005 002 699 A1 und DE 203 15 755 U1 wird vorgeschlagen, beim Loslassen des "Gaspedals" des Traktors ein Bremssignal an die Anhängerbremse abzugeben, so dass dieser gebremst wird und ein Aufschieben des Anhängers auf den Traktor verhindert wird.

Problematisch bei dieser Bremsstrategie ist allerdings, dass der Anhänger bei einem Rollen des Traktors, ohne Schubbetrieb des Anhängers bereits über die Anhängerbremse abgebremst wird, so dass zwar ein Auflaufen des Anhängers auf den Traktor verhindert wird, andererseits jedoch durch das unerwünschte Abbremsen des Traktors wiederum instabile Fahrzustände auftreten können.

Demgegenüber liegt der Erfindung die Aufgabe zugrunde, ein Verfahren zum Bremsen eines fremdkraftgebremsten Gerätes mit eigenem Fahrwerk, das an ein Nutzfahrzeug angehängt ist, und ein Bremssystem eines fremdkraftgebremsten Gerätes mit eigenem Fahrwerk, das an ein Nutzfahrzeug angehängt ist, zu schaffen, durch die die Betriebssicherheit im Fahrbetrieb verbessert ist.

Diese Aufgabe wird im Hinblick auf das Verfahren durch die Merkmalskombination des Patentanspruches 1 und im Hinblick auf das Bremssystem durch die Merkmalskombination des nebengeordneten Patentanspruches 10 gelöst.

Vorteilhafte Weiterbildungen der Erfindung sind Gegenstand der Unteransprüche.

Beim erfindungsgemäßen Verfahren ist ein fremdkraftgebremstes Gerät mit eigenem Fahrwerk, beispielsweise ein Anhänger, an ein motorgetriebenes Nutzfahrzeug, beispielsweise einen Traktor, angehängt. In dem Fall, in dem das Gerät auf das Nutzfahrzeug schiebt, erfolgt das Bremsen des Anhängers bei unbetätigter Fahrzeugbremse dadurch, dass zunächst ein Schleppmoment des Motors des Nutzfahrzeugs bestimmt wird. In Abhängigkeit von diesem Schleppmoment wird ein Bremssignal berechnet. Die Bremse des Gerätes wird dann in Abhängigkeit von diesem Bremssignal betätigt.

Die Erfassung des Schleppmomentes kann beispielsweise mittelbar über die Erfassung der Drehzahl des Motors des Nutzfahrzeugs erfolgen, wobei dann das Schleppmoment aus einer Drehzahl-/Schleppmoment-Kennlinie ausgelesen wird.

Bei einer Variante der Erfindung wird der Bremsvorgang des Gerätes bei Überschreiten eines vorbestimmten Schleppmoment-Grenzwertes eingeleitet. D.h. ein gewisses Schleppmoment wird zugelassen, in dem kein Abbremsen des Gerätes erfolgt. Erst bei Überschreiten dieses Grenzwertes wird dann zur Verhinderung der eingangs geschilderten unkontrollierten Fahrzustände der Bremsvorgang des Gerätes eingeleitet.

Der Aufwand zur Ansteuerung der Bremse des Gerätes kann vereinfacht werden, indem der Bremsvorgang bei Drehzahlen eingeleitet wird, die gleich oder größer als die Nenndrehzahl des Motors des Nutzfahrzeuges ist. Messungen zeigen jedoch auch, dass bereits bei hohen Übersetzungsverhältnissen und entsprechend niedriger Nutzfahrzeuggeschwindigkeit ein Bremseingriff benötigt werden kann.

Eine Verbesserung des Verfahrens besteht darin, dass die Bremskraft auch in Abhängigkeit von einem am Getriebe des Nutzfahrzeugs wirksamen Übersetzungsverhältnis eingestellt wird. D.h. das Bremssignal wird in Abhängigkeit von der aktuellen Getriebeübersetzung und dem Schleppmoment eingestellt, so dass die Bremskraft sich mit ändernder Getriebeübersetzung verändert.

Die Erfindung ist jedoch keinesfalls auf kontinuierlich verstellbare Getriebe (CVT-Getriebe) beschränkt und kann auch bei herkömmlichen Getrieben oder Hybridgetrieben verwendet werden.

Bei einem Ausführungsbeispiel der Erfindung wird die Drehzahl-/Schleppmoment-Kennlinie oberhalb der Nenndrehzahl als etwa linear angenommen.

Zur Verbesserung des Bremsverhaltens können Anpassfaktoren in die Berechnung des Bremssignals eingehen, die eine Anpassung einer Bremskraft-Kennlinie im Bereich niedriger und hoher Drehzahlen ermöglichen.

Bei einer Variante der Erfindung wird die Bremskraft-Kennlinie im Bereich niedriger Geschwindigkeiten auf einen vorbestimmten konstanten Wert begrenzt.

Diese Begrenzung und auch die Anpassungsfaktoren können fahrzeugabhängig gewählt werden, so dass ein zuverlässiges Bremsen des Gerätes bei unterschiedlichen Zugfahrzeugen gewährleistet ist.

Der Bremsvorgang kann unabhängig von der oben angesprochenen Strategie schon eingeleitet werden, wenn "vom Gas gegangen" und das Getriebeübersetzungsverhältnis in Richtung "kleinerer" Gänge verstellt wird.

Das erfindungsgemäße Bremssystem zum Bremsen eines fremdkraftgebremsten Gerätes mit eigenem Fahrwerk, das an ein motorgetriebenes Nutzfahrzeug angehängt ist, weist eine Einrichtung zur Erfassung des Schleppmomentes des Motors des Nutzfahrzeugs auf. Das Bremssystem hat des Weiteren eine Auswerteeinheit zum Bestimmen eines Steuersignals in Abhängigkeit von diesem Schleppmoment und eine Steuereinheit, an die das Steuersignal abgegeben wird, zum Abgeben eines entsprechenden Bremssignals an ein Anhängerbremsventil oder die Anhängerbremse.

Erfindungsgemäß wird es bevorzugt, wenn die Einrichtung zur Erfassung eines Schleppmomentes einen Drehzahlsensor aufweist.

Die oben genannte Auswerteeinheit des Bremssystems hat vorzugsweise einen Speicher zur Ablage einer Schleppmoment-/Drehzahl-Kennlinie und/oder eines Bremskraftkennlinienfelds.

Ein Parameter dieses Kennlinienfeldes kann beispielsweise das Getriebeübersetzungsverhältnis bei unterschiedlichen Fahrzeuggeschwindigkeiten sein.

Im Folgenden werden bevorzugte Ausführungsbeispiele der Erfindung anhand schematischer Zeichnungen näher erläutert. Es zeigen:
Figur 1 eine äußerst stark vereinfachte Prinzipskizze eines Traktors mit Anhänger;
Figur 2 ein Blockdiagramm zur Veranschaulichung eines erfindungsgemäßen Steuerverfahrens;
Figur 3 eine reale Motordrehmomentkennlinie eines Traktordieselmotors;
Figur 4 ein vereinfachtes Verfahren zur Ansteuerung des Bremssystems.

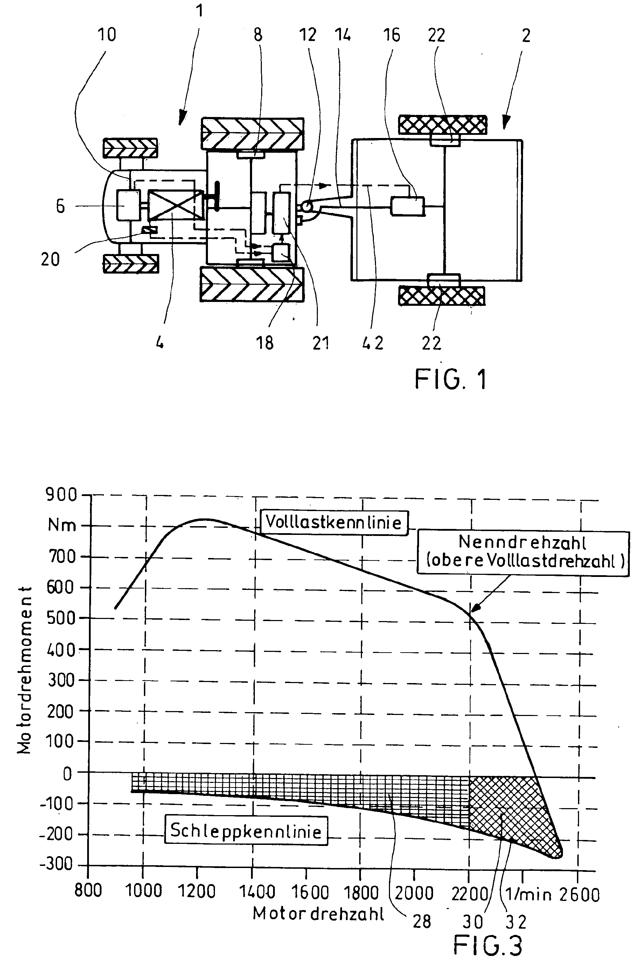

Das erfindungsgemäße Bremssystem wird im Folgenden anhand eines Anwendungsfalles erläutert, bei dem - wie in Figur 1 angedeutet - ein Traktor 1 einen fremdkraftbetätigten Anhänger 2 zieht. D.h. die Bremse dieses Anhängers 2 wird über die Bremsanlage des Traktors 1 angesteuert.

Beim dargestellten Ausführungsbeispiel hat der Traktor 1 einen Dieselmotor 4, der über ein CVT-Getriebe 6 eine Hinterachse 8 und eine Vorderachse 10 des Traktors 1 antreibt - dieser ist somit mit einem Allradantrieb ausgeführt, der sich beispielsweise bei Straßenfahrt auf einen Zweiradantrieb umschalten lässt, bei dem lediglich die Hinterachse 8 angetrieben ist.

Der Anhänger 2 ist über eine Kupplungseinrichtung 12 mit dem Traktor 1 verbunden. Wie erwähnt, ist der Anhänger 2 fremdkraftgebremst, wobei dieser im vorliegenden Fall mit einem hydraulischen Bremssystem ausgeführt ist, das über die Betriebsbremse des Traktors 1 mit Druckmittel versorgt ist. Diese Druckmittelversorgung ist in Figur 1 durch die Bremsleitung 14 angedeutet, über die die Bremsanlage des Anhängers 2 mit einem Anhängerbremsventil 16 mit Druckmittel versorgt werden kann, um den Anhänger 2 bei Betätigung der Betriebsbremse des Traktors 1 abzubremsen.

Wie eingangs erläutert, kann bei einem sehr schweren Anhänger 2 dann ein Problem auftreten, wenn der Traktor 1 über das CVT-Getriebe 6 und ohne Betätigung der Betriebsbremse abgebremst wird. Bei Verwendung dieser Motorbremse wird dementsprechend im Normalfall der Anhänger 2 nicht abgebremst, so dass er den Traktor 1 schiebt. Erfindungsgemäß wird dieser instabile Fahrzustand verhindert, indem auch bei Verwendung der Motorbremse der Anhänger 2 abgebremst wird. Hierzu wird das bei einer Motorbremsung wirksame Schleppmoment am Dieselmotor 4 erfasst. Dies kann beispielsweise direkt durch Auslesen des aktuellen Drehmomentes aus dem Motorsteuergerät erfolgen - beim dargestellten Ausführungsbeispiel wird jedoch eine einfachere Lösung verwendet, bei der die Drehzahl des Dieselmotors 4 über einen Drehzahlsensor 20 erfasst und zur Auswerteeinheit 18 gemeldet wird. Wie im Folgenden noch näher erläutert wird, ist in dieser Auswerteeinheit 18 eine Motordrehmoment-/Motor-drehzahl-Kennlinie abgelegt, so dass aus der erfassten Motordrehzahl das zugehörige Motordrehmoment, im Schubbetrieb das Schleppmoment ermittelt werden kann. In Abhängigkeit von diesem Schleppmoment und ggf. anderen Parametern, wie beispielsweise das aktuelle Übersetzungsverhältnis des CVT-Getriebes oder der Fahrzeuggeschwindigkeit, wird dann über die Auswerteeinheit 18 ein Bremssignal bestimmt, das über eine Steuereinheit 21 an die Anhängerbremsanlage abgegeben wird, so dass das Anhängerbremsventil 16 angesteuert und entsprechend die Anhängerbremsanlage 22 betätigt wird. D.h. das Abbremsen des Anhängers 2 erfolgt im Wesentlichen in Abhängigkeit vom wirksamen Schleppmoment des Dieselmotors 4. Es handelt sich dabei um keine Regelung sondern eine Steuerung des Bremsvorgangs, in die das aktuelle Schleppmoment und ggf. die oben genannten anderen Parameter eingehen.

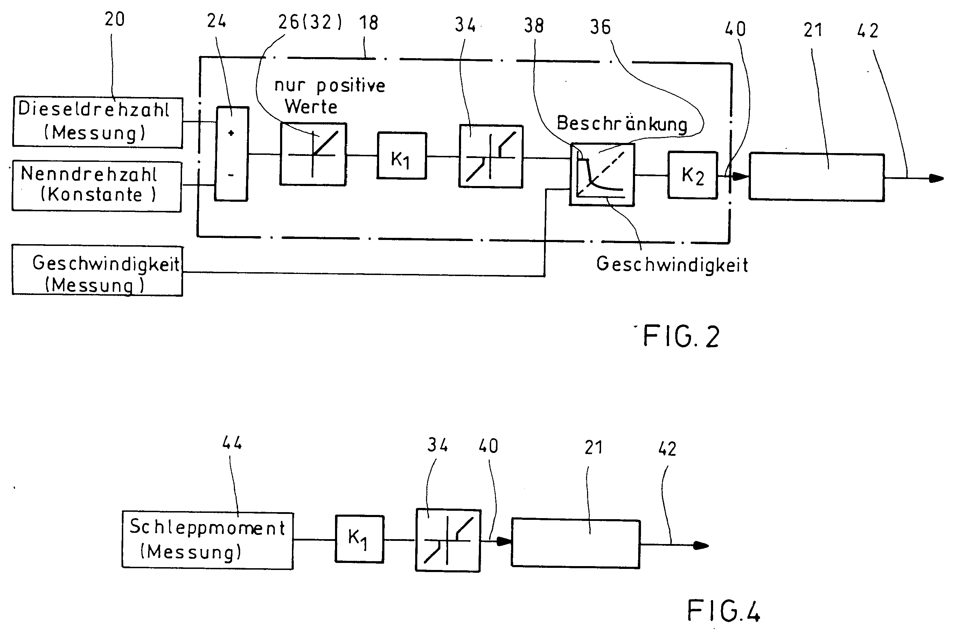

Figur 2 zeigt ein Blockschaubild des zum Abbremsen des Anhängers 2 verwendeten Verfahrens. Wie vorstehend erwähnt, wird über den Drehzahlsensor 20 die Drehzahl des Dieselmotors 4 bestimmt. Des Weiteren wird in einem Speicher der in Figur 2 strichpunktiert angedeuteten Auswerteeinheit 18 die Nenndrehzahl (obere Volllastdrehzahl) abgelegt - diese Nenndrehzahl ist eine traktorspezifische Konstante.

Erfindungsgemäß wird die erfasste Dieseldrehzahl mit der konstanten Nenndrehzahl in einem Vergleichsglied 24 verglichen und in Abhängigkeit von diesem Vergleich entschieden, ob ein Schubbetrieb vorliegt, d.h. ob der Traktor 1 über den Dieselmotor 4 gebremst wird. Im Falle eines Schubbetriebes wird dann aus einer in der Auswerteeinheit 18 abgelegten Kennlinie 26 ein Schleppmoment ausgelesen.

Figur 3 zeigt die Motordrehmoment-/Motordrehzahl-Kennlinie eines Dieselmotors 4. Dementsprechend steigt das Motordrehmoment bei normaler Betriebsweise des Motors ("Gas geben") an und erreicht im Bereich zwischen 1200 und 1400 Umdrehungen ein Maximum. Daran anschließend sinkt das Drehmoment bis zur Nenndrehzahl ab. Darüber liegende Drehzahlen (größer 2200 1/min) erreicht der Dieselmotor 4 nur, wenn er angetrieben ist und somit als Motorbremse wirkt. Die Schleppkennlinie ist unterhalb der 0-Linie in Figur 3 dargestellt. Prinzipiell kann der Dieselmotor 4 in den beiden schraffierten Bereichen 28, 30 als Motorbremse wirken. Vorteilhaft ist es jedoch, den Motor im Bereich 30 als Motorbremse zu betreiben, da in diesem Bereich bei vergleichsweise hohem Schubmoment sehr schnell die maximale Drehzahl erreicht wird. In Kenntnis dieser Kennlinie kann sehr einfach aus der gemessenen Motordrehzahl auf das in etwa anliegende Schleppmoment zurückgeschlossen werden, so dass eine direkte Messung des Motormomentes nicht erforderlich ist.

Mit anderen Worten gesagt, beim erfindungsgemäßen Verfahren wird das vergleichsweise hohe Schleppmoment im Bereich des Kennlinienabschnittes 32 des schraffierten Bereiches 30 ausgenutzt. Prinzipiell könnte man auch den Kennlinienabschnitt des schraffierten Bereiches 28 für die Motorbremse ausnutzen. Diesen Bereich erreicht man aber auch schon beim ganz normalen Fahren, wenn man "den Fuß vom Gas nimmt". In diesem Betriebszustand soll jedoch das erfindungsgemäße Verfahren noch nicht greifen, so dass man lediglich auf den Kennlinienabschnitt 32 abhebt.

Darüber hinaus ist die Notwendigkeit zum automatischen Anhängerbremsen im Bereich 28 relativ gering, da hier das Schleppmoment vergleichsweise gering ist und somit über den Motor nur ein geringes Bremsmoment auf die Räder wirkt - die Gefahr einer Überschreitung der Seitenführungskraft der Räder ist dann relativ gering.

Gemäß der Darstellung in Figur 2 wird angenommen, dass der Kennlinienabschnitt 32 oberhalb der Nenndrehzahl in etwa linear und im Positiven verläuft - dementsprechend werden dann aus der Kennlinie 26 zu den einzelnen Dieseldrehzahlen proportionale Schubmomente ausgegeben. Der Vorteil dieser Proportionalität besteht unter anderem darin, dass bei einer nur gering oberhalb der Nenndrehzahl liegenden gemessenen Dieseldrehzahl die Anhängebremsung noch relativ gering ist. Bei Annäherung an die maximale Drehzahl wird in einer drehzahlabhängigen Rampe mit "weichen" Übergängen immer stärker gebremst. Ein schlagartiges Bremsen kann somit vermieden werden.

In Figur 2 ist mit dem Bezugszeichen 34 ein Hystereseblock dargestellt, der ein Hängenbleiben des Anhängerbremsventils 16 bei ganz geringen Steuersignalen (Betätigungen) verhindert. In diesem Bereich wird das aus der Kennlinie 26 ausgelesene Schleppmoment noch über einen konstanten Faktor k₁ angepasst, wobei über den Faktor k₁ eine Anpassung/Korrektur des Schleppmomentes in vergleichsweise geringen Drehzahlbereich erfolgt. Später erfolgt noch eine Korrektur über eine zweite Konstante k₂, über die der Bereich höherer Drehzahl angepasst wird. Selbstverständlich können auch noch andere Anpassungsfaktoren zur Anpassung der Kennlinie verwendet werden.

Abgesehen von den Anpassungsfaktoren k₁, k₂ geht bis hierhin lediglich die Dieseldrehzahl in die Bestimmung des Schleppmomentes ein. Unberücksichtigt ist bisher die Höhe der Bremskraft, die letztendlich auch vom Übersetzungsverhältnis am CVT-Getriebe 6 abhängt, da der Traktor mittels der Motorbremse bei unterschiedlichen Getriebeübersetzungen unterschiedlich stark bremst, wobei das Schleppmoment des Dieselmotors 4 im Wesentlichen konstant bleibt. Bei einem "niedrigerem Gang" erzeugt das Schleppmoment eine viel höhere Radbremskraft als bei einem "hohen Gang" - diese unterschiedlichen Bremskräfte müssen bei der erfindungsgemäßen Steuerung berücksichtigt werden. Bei einem stufenlosen CVT-Getriebe kann die aktuelle Getriebeübersetzung aus der aktuellen, gemessenen Fahrgeschwindigkeit und der aktuellen Motordrehzahl berechnet werden. Mit dieser Getriebeübersetzung (aus Fahrgeschwindigkeit, Drehzahl) ist dann auch die aktuelle Bremskraft an den Rädern des Traktors 1 bekannt, die bei der jeweiligen Übersetzung von dem wirkenden Schleppmoment erzeugt wird. Dementsprechend muss abhängig vom Signal der aktuellen Fahrgeschwindigkeit eine veränderte Bremskraft am Anhänger 2 erzeugt werden.

Erfindungsgemäß erfolgt dies über ein traktor- und dieselmotorabhängiges Bremskraft-Kennfeld 36, wobei jede Kennlinie in etwa einen hyperbolischen Verlauf (siehe Figur 2) hat. Die theoretisch bei einer Fahrgeschwindigkeit 0 (Abszisse in Figur 2) unendlich hohe Anhängerabbremsung wird bei vergleichsweise geringen Geschwindigkeiten auf einen konstanten hohen Wert 38 begrenzt, um ein Blockieren der Anhängerräder durch übermäßiges Bremsen zu vermeiden. In Abhängigkeit von der gemessenen Fahrgeschwindigkeit und dem über die Kennlinie 36 ermittelten Schleppmoment wird dann ein mit dem Faktor k₂ korrigiertes Steuersignal 40 von der Auswerteeinheit 18 an die Steuereinheit 21 abgegeben, über die dann schließlich ein Bremssignal 42 für das Anhängerbremsventil 16 generiert wird, so dass der Anhänger 2 in Abhängigkeit vom Schleppmoment und der aktuellen Getriebeübersetzung (entsprechend der Fahrgeschwindigkeit) abgebremst wird, so dass ein Aufschieben des Anhängers 2 zuverlässig verhindert ist und somit instabile Fahrzustände vermieden werden können.

Ein Vorteil des in Figur 2 erläuterten Steuerverfahrens für das Bremssystem liegt darin, dass nur sehr einfache Signale: die Dieseldrehzahl und die Fahrgeschwindigkeit erfasst werden müssen - diese Signale sind auf jedem modernen Traktor elektrisch verfügbar. Eine aufwendige Messung des Motormomentes oder - alternativ - des Getriebeeingangs- oder Getriebeausgangsmomentes ist nicht erforderlich.

Diese Steuerungsstruktur bedarf im Prinzip nur eines traktorabhängigen Parametersatzes, der im Prinzip aus der Nenndrehzahl des Dieselmotors, den traktorspezifischen Anpassungsfaktoren k₁ und k₂ und der schleppmomentabhängigen Traktorverzögerung im gesamten Geschwindigkeitsbereich zum Erstellen des Kennlinienfelds 36 besteht. Dabei muss die schleppmomentabhängige Traktorverzögerung für jeden Traktortyp spezifisch angepasst werden. Die Anhängerabbremsung erfolgt dann anhand dieser einmal eingestellten Werte, so dass keine weiteren Sensoren oder Messgrößen notwendig sind. Dabei können geringe Fehler in der Stärke der Anhängerabbremsung in Kauf genommen werden.

Figur 4 zeigt eine andere Steuerstruktur, die im Prinzip beim erfindungsgemäßen Verfahren zum Bremsen des Anhängers 2 verwendet werden kann. Bei dieser Struktur wird das Schleppmoment direkt aus dem Motorsteuergerät 44 ausgelesen und dann über den Anpassungsfaktor k1 korrigiert. Über den Hystereseblock 34 erfolgt dann wiederum eine Korrektur, so dass ein Hängenbleiben des Anhängerbremsventils 16 im Bereich geringer Auslenkungen verhindert wird. Auf die vorbeschriebene geschwindigkeits- oder übersetzungsabhängige Abbremsung des Anhängers 2 wird bei dem Ausführungsbeispiel gemäß Figur 4 verzichtet, wobei es dann bei ungünstigen Betriebsbedingungen entweder zu einem übermäßigen Aufschieben des Anhängers (zu geringe Abbremsung) oder zu einem Überbremsen des Anhängers kommen kann, da die Bremskraft bei konstantem Schleppmoment stark abhängig von der tatsächlichen Getriebeübersetzung ist. Dieser Nachteil wird jedoch bei der Steuerstruktur gemäß Figur 4 in Kauf genommen. Das korrigierte Steuersignal 40 wird dann an die Steuereinheit 21 abgegeben, die wiederum ein Bremssignal 42 zur Betätigung des Anhängerbremsventils 16 generiert.

Mit den oben beschriebenen Steuerstrategien ist ein zuverlässiges Abbremsen des Anhängers bei Verwendung der Motorbremse des Traktors 1 gewährleistet.

Wie beschrieben, wird das Motorbremsen durch Zurückstellen des Gaspedals/Joysticks eingeleitet, wobei evtl. auch eine Getriebeverstellung in Richtung "kleinerer Gänge" erfolgt. Da der Motor im Schiebebetrieb nicht sofort die Nenndrehzahl erreicht, kann es zu einer Verzögerung beim Abbremsen des Anhängers kommen. Um diesen Zustand zu überbrücken, kann man die Zustände "vom Gas gehen" und (logisches "und") "Getriebeverstellung in Richtung kleinerer Gänge" erfassen und dann nach einer vorbestimmten Zeitspanne von bspw. 0.5 sec die Anhängerbremsung einleiten - kurz danach wird der Motor auch die Nenndrehzahl überschreiten, so dass das weitere Abbremsen im vorbeschriebenen Sinn erfolgt.

Beim beschriebenen Ausführungsbeispiel wird ein Verbrennungsmotor mit CVT-Getriebe verwendet. Selbstverständlich können auch andere Motorkonzepte, beispielsweise ein Elektromotor oder ein Hybridantrieb eingesetzt werden. Die Betätigung der Anhängerbremse kann elektrisch, pneumatisch oder hydraulisch erfolgen. Anstelle des CVT-Getriebes kann selbstverständlich auch ein herkömmliches Getriebe oder ein Leistungsverzweigungsgetriebe mit einem mechanischen Teil und einem hydrostatischen Teil (CVT) verwendet werden.

Offenbart sind ein Verfahren zum Bremsen eines fremdkraftgebremsten Gerätes und ein Bremssystem eines derartigen fremdkraftgebremsten Gerätes, wobei in Abhängigkeit von einem Schleppmoment eines das Gerät ziehenden Nutzfahrzeuges ein Bremssignal zum Abbremsen des Anhängers bei Motorbremsung des Nutzfahrzeuges generiert wird.

## Patentansprüche

1. Verfahren zum Bremsen eines fremdkraftgebremsten Gerätes (2) mit eigenem Fahrwerk, das an ein motorgetriebenes Nutzfahrzeug (1) angehängt ist, **gekennzeichnet durch** die Schritte:
- Ermitteln eines Schleppmomentes des Motors (4) des Nutzfahrzeugs (1) in dem Fall, in dem das Gerät (2) auf das Nutzfahrzeug (1) schiebt;
- Bestimmen eines Bremssignals in Abhängigkeit vom Schleppmoment des Motors (4) und
- Betätigen einer Bremse (16) des Gerätes (2) in Abhängigkeit vom Bremssignal.

2. Verfahren nach Patentanspruch 1, wobei eine Drehzahl des Motors (4) erfasst und aus einer Drehzahl-/Schleppmoment-Kennlinie in Abhängigkeit von der erfassten Drehzahl das Schleppmoment ausgelesen wird.

3. Verfahren nach Patentanspruch 1 oder 2, wobei der Bremsvorgang des Gerätes (2) bei Überschreiten eines Schleppmomentgrenzwertes eingeleitet wird.

4. Verfahren nach einem der vorhergehenden Patentansprüche, wobei der Bremsvorgang bei Drehzahlen gleich oder größer einer Nenndrehzahl des Motors (4) oder bei niedrigen Nutzfahrzeuggeschwindigkeiten auch bereits unterhalb der Nenndrehzahl eingeleitet wird.

5. Verfahren nach einem der vorhergehenden Patentansprüche, wobei die Bremskraft in Abhängigkeit von einem am Getriebe (6) des Nutzfahrzeugs (1) wirksamen Übersetzungsverhältnis eingestellt wird.

6. Verfahren nach einem der Patentansprüche 2 bis 5, wobei die Drehzahl-/ Schleppmoment-Kennlinie oberhalb der Nenndrehzahl als etwa linear angenommen wird.

7. Verfahren nach Patentanspruch 6, wobei in die Berechnung des Bremssignals Anpassungsfaktoren (k₁, k₂) zur Anpassung im Bereich niedriger Drehzahlen und hoher Drehzahlen eingehen.

8. Verfahren nach Patentanspruch 6 oder 7, wobei die Bremskraft im Bereich niedriger Nutzfahrzeuggeschwindigkeit auf einen vorbestimmten Wert (38) begrenzt ist.

9. Verfahren nach Patentanspruch 8, wobei die Begrenzung nutzfahrzeugabhängig gewählt ist.

10. Bremssystem zum Bremsen eines fremdkraftgebremsten Gerätes (2) mit eigenem Fahrwerk, das an ein motorbetriebenes Nutzfahrzeug (1) angehängt ist,
**gekennzeichnet durch** eine Einrichtung (20) zur Erfassung eines Schleppmomentes des Motors (4) des Nutzfahrzeugs (1) bei Motorbremsung, eine Auswerteeinheit (18) zum Bestimmen eines Steuersignals und eine Steuereinheit (21), an die das Steuersignal abgegeben wird, zum Abgeben eines entsprechenden Bremssignals (42) an ein Bremsventil (16) des Gerätes (2).

11. Bremssystem nach Patentanspruch 10, wobei die Einrichtung (20) einen Sensor zur Erfassung der Motordrehzahl hat.

12. Bremssystem nach Patentanspruch 10 oder 11, wobei die Auswerteeinheit (18) einen Speicher zur Ablage einer Schleppmoment-/Drehzahl-Kennlinie (36) hat.

13. Bremssystem nach Patentanspruch 12, wobei in der Auswerteeinheit (18) ein Kennlinienfeld (36) zur Ermittlung der Bremskraft in Abhängigkeit vom Schleppmoment und von der Getriebeübersetzung oder der Nutzfahrzeuggeschwindigkeit abgelegt ist.

14. Bremssystem nach Patentanspruch 13, wobei das Getriebe ein CVT-Getriebe (6) ist.

## Claims

1. Method for braking a power-braked device (2) having its own travelling mechanism, which is attached to an engine-driven commercial vehicle (1), **characterized by** the steps of:
- ascertaining a drag torque of the engine (4) of the commercial vehicle (1) in the case where the device (2) is pushing against the commercial vehicle (1);
- determining a braking signal in dependence on the drag torque of the engine (4) and
- actuating a brake (16) of the device (2) in dependence on the braking signal.

2. Method according to Patent Claim 1, wherein a speed of the engine (4) is detected and the drag torque is selected from a speed/drag torque characteristic in dependence on the detected speed.

3. Method according to Patent Claim 1 or 2, wherein the braking operation of the device (2) is initiated when a drag torque limit value is exceeded.

4. Method according to one of the preceding claims, wherein the braking operation is initiated at speeds equal to or greater than a rated speed of the engine (4) or, in the case of low speeds of the commercial vehicle, even already below the rated speed.

5. Method according to one of the preceding patent claims, wherein the braking force is set in dependence on the step-up ratio effective at the transmission (6) of the commercial vehicle (1).

6. Method according to one of Patent Claims 2 to 5, wherein the speed/drag torque characteristic above the rated speed is assumed to be approximately linear.

7. Method according to Patent Claim 6, wherein the calculation of the braking signal includes adjustment factors (k₁, k₂) for adjustment in the range of low speeds and high speeds.

8. Method according to Patent Claim 6 or 7, wherein, in the range of a low speed of the commercial vehicle, the braking force is limited to a predetermined value (38).

9. Method according to Patent Claim 8, wherein the limitation is chosen in dependence on the commercial vehicle.

10. Braking system for braking a power-braked device (2) having its own travelling mechanism, which is attached to an engine-driven commercial vehicle (1),
**characterized by** a device (20) for detecting the drag torque of the engine (4) of the commercial vehicle (1) during engine braking, an evaluation unit (18) for determining a control signal and a control unit (21), to which the control signal is issued, for issuing a corresponding braking signal (42) to a brake valve (16) of the device (2).

11. Braking system according to Patent Claim 10, wherein the device (20) has a sensor for detecting the engine speed.

12. Braking system according to Patent Claim 10 or 11, wherein the evaluation unit (18) has a memory for storing a drag torque/speed characteristic (36).

13. Braking system according to Patent Claim 12, wherein a characteristic map (36) for ascertaining the braking force in dependence on the drag torque and the transmission step-up for the speed of the commercial vehicle is stored in the evaluation unit (18).

14. Braking system according to Patent Claim 13, wherein the transmission is a CVT transmission (6).

## Revendications

1. Procédé de freinage d'un appareil (2) freiné par une force externe avec châssis propre accroché à un véhicule utilitaire (1) entraîné par moteur, **caractérisé par** les étapes suivantes :
- détermination d'un couple de traînée du moteur (4) du véhicule utilitaire (1) dans le cas dans lequel l'appareil (2) glisse sur le véhicule utilitaire (1) ;
- détermination d'un signal de freinage en fonction du couple de traînée du moteur (4) ; et
- actionnement d'un frein (16) de l'appareil (2) en fonction du signal de freinage.

2. Procédé selon la revendication 1, une vitesse de rotation du moteur (4) étant déterminée et le couple de traînée étant lu à partir d'une courbe caractéristique vitesse de rotation/couple de traînée, en fonction de la vitesse de rotation détectée.

3. Procédé selon la revendication 1 ou 2, le processus de freinage de l'appareil (2) étant commencé en cas de dépassement d'une valeur limite de couple de traînée.

4. Procédé selon l'une quelconque des revendications précédentes, le processus de freinage étant commencé en cas de vitesses de rotation supérieures ou égales à une vitesse de rotation nominale du moteur (4) ou en cas de basses vitesses du véhicule utilitaire déjà en dessous de la vitesse de rotation nominale.

5. Procédé selon l'une quelconque des revendications précédentes, la force de freinage étant réglée en fonction d'un rapport de démultiplication opérant au niveau de la boîte de vitesses (6) du véhicule utilitaire (1).

6. Procédé selon l'une quelconque des revendications 2 à 5, la courbe caractéristique vitesse de rotation/couple de traînée prenant une forme approximativement linéaire au-dessus de la vitesse de rotation nominale.

7. Procédé selon la revendication 6, des facteurs d'adaptation (k₁, k₂) étant utilisés dans le calcul du signal de freinage pour réaliser une adaptation dans la zone des vitesses de rotation inférieures et des vitesses de rotation supérieures.

8. Procédé selon la revendication 6 ou 7, la force de freinage étant limitée à une valeur (38) prédéfinie dans la zone de vitesse inférieure du véhicule utilitaire.

9. Procédé selon la revendication 8, la limitation étant choisie en fonction du véhicule utilitaire.

10. Système de freinage pour freiner un appareil (2) freiné par une force externe avec un châssis propre accroché à un véhicule utilitaire (1) entraîné par moteur, **caractérisé par** un dispositif (20) de détection d'un couple de traînée du moteur (4) du véhicule utilitaire (1) en cas de freinage du moteur, une unité d'analyse (18) pour déterminer un signal de commande et une unité de commande (21) à laquelle le signal de commande est envoyé, pour envoyer un signal de freinage (42) correspondant à la soupape de frein (16) de l'appareil (2).

11. Système de freinage selon la revendication 10, le dispositif (20) ayant un capteur pour détecter la vitesse de rotation du moteur.

12. Système de freinage selon la revendication 10 ou 11, l'unité d'analyse (18) ayant une mémoire pour mémoriser une courbe caractéristique couple de traînée/vitesse de rotation (36).

13. Système de freinage selon la revendication 12, un champ de courbe caractéristique (36) étant classé dans l'unité d'analyse (18) pour déterminer la force de freinage en fonction du couple de traînée et de la démultiplication de boîte de vitesses ou de la vitesse du véhicule utilitaire.

14. Système de freinage selon la revendication 13, la boîte de vitesses étant une boîte de vitesses CVT (6).
